# EUROPEAN PATENT APPLICATION

(11) **EP 4 549 904 A1**
(43) Date of publication of application: **07.05.2025**
(21) Application number: 23830268.1
(22) Date of filing: 27.06.2023
(51) Int. Cl.: G01M 13/027

(54) **FULL-POWER TEST PLATFORM AND METHOD FOR TANDEM DOUBLE-WIND-WHEEL WIND TURBINE GENERATOR SET**

(30) Priority: 28.06.2022 CN 202210744312
(71) Applicant: Huaneng Clean Energy Research Institute, Beijing 102209 (CN)
(72) Inventor: LU, Zhike, Beijing 102209 (CN); GUO, Xiaojiang, Beijing 102209 (CN); TANG, Wei, Beijing 102209 (CN); LAO, Wenxin, Beijing 102209 (CN); YE, Zhaoliang, Beijing 102209 (CN); LIU, Xin, Beijing 102209 (CN); YAN, Shu, Beijing 102209 (CN)
(74) Representative: advotec.
(86) International application number: PCT/CN2023/102854
(87) International publication number: WO 2024/002091

(57) **Abstract**

Disclosed are a full-power test platform and method for a tandem double-wind-wheel wind turbine generator set. The test platform comprises a driving frequency converter, a set converter, a tandem double-wind-wheel transmission chain, driving electric motor assemblies, a signal collector, a load simulator, and a hydraulic module, wherein two ends of the tandem double-wind-wheel transmission chain are respectively connected to the driving electric motor assemblies, the driving electric motor assemblies at the two ends are both connected to the driving frequency converter, and the set converter and the signal collector are both connected to the tandem double-wind-wheel transmission chain; the signal collector is connected to the load simulator, and the load simulator is connected to the hydraulic module; and the driving frequency converter and the set converter are respectively connected to an external power grid.

## Description

### TECHNICAL FIELD

This disclosure pertains to the technical field of wind turbine testing, particularly involving a full-power testing platform and method for tandem dual-rotor wind turbine generator systems.

### BACKGROUND

At present, wind turbine generator systems are developing towards high power, long blades and high towers. Under the condition that there is no breakthrough in the material system, the core key technologies of wind turbine generator systems subject to many limitations. Since the efficiency of single-rotor wind turbine generators is difficult to improve, it is urgent to develop new high-efficiency wind energy conversion devices. Tandem dual-rotor wind turbine generator systems have attracted attention duo to their high efficiency.

Compared with single-rotor wind turbine generators, the transmission systems of tandem dual-rotor wind turbine generators are longer and more complex, and there are aerodynamic interference and coupling between the two rotors. Therefore, comprehensive power tests need to be carried out on the ground to ensure the safety and reliability of tandem dual-rotor wind turbine generators. However, the existing full-power testing platforms at home and abroad mainly target single-rotor wind turbine generators, and there is no full-power testing platform dedicated to tandem dual-rotor wind turbine generators. The existing full-power testing platforms are mainly designed for single-rotor wind turbine generators. They can only drive a single rotor to rotate and cannot be used for full-power testing of dual-rotor wind turbine generators. Moreover, they can only simulate the aerodynamic force of a single rotor and cannot simulate the aerodynamic coupling force of two rotors.

### SUMMARY

The objective of this disclosure is to provide a full-power testing platform and method for tandem dual-rotor wind turbine generator systems, aiming to address the current issue that there is no dedicated full-power testing platform for tandem dual-rotor wind turbine generator systems.

To achieve the above mentioned objective, the following technical solutions are adopted in this disclosure.

The full-power testing platform for tandem dual-rotor wind turbine generator systems includes a dragging frequency converter, a unit converter, a tandem dual-rotor transmission chain, dragging motor assemblies, a signal acquisition instrument, a load simulator and a hydraulic module. Both ends of the tandem dual-rotor transmission chain are respectively connected to a dragging motor assembly, and the dragging motor assemblies at the two ends are both connected to the dragging frequency converter. The unit converter and the signal acquisition instrument are both connected to the tandem dual-rotor transmission chain. The signal acquisition instrument is connected to the load simulator, and the load simulator is connected to the hydraulic module. The dragging frequency converter and the unit converter are respectively connected to the external power grid.

In some embodiments, the external power grid is connected to the dragging frequency converter and the unit converter via a first transformer, a second transformer is arranged between the dragging frequency converter and the first transformer, and a third transformer is arranged between the unit converter and the first transformer.

In some embodiments, the first transformer is provided with a reactive power compensation unit for compensating reactive power consumed by the testing platform from the power grid.

In some embodiments, the dragging motor assembly includes a dragging motor, a torque flange, a reduction gearbox, a compensation coupling and a dynamic non-torque loader, wherein a main shaft end of the tandem dual-rotor transmission chain is connected to the dynamic non-torque loader. The dynamic non-torque loader, the compensation coupling, the reduction gearbox, the torque flange, and the dragging motor are connected in sequence.

In some embodiments, the dynamic non-torque loader is connected to the hydraulic module.

In some embodiments, the hydraulic module includes a hydraulic controller and a hydraulic station, and the hydraulic controller is connected to the hydraulic station.

In some embodiments, the simulation parameters of the load simulator include wind speed, blade parameters, generator speed, and generator power.

In some embodiments, the test method of the full-power testing platform for tandem dual-rotor generator systems includes the following steps:
install the tandem dual-rotor transmission chain, and connect the main shaft ends of the front and rear rotor to the output ends of dynamic non-torque loaders, respectively;
perform an insulation test on a circuit within a cabin before power-on, and conduct a static test on the unit after power-on;
drag the tandem dual-rotor transmission chain to the rated rotation speed by the dragging motor, let it idle for a period of time, and check whether the operation of the unit is stable, and whether there are abnormal conditions such as vibration or oil leakage;
carry out load tests according to different predetermined average wind speeds respectively, record the vibration of each component of the transmission chain, the relevant temperature values of the generator, gearbox, main bearing, and generator power fluctuation in real time, and treat and analyze the operation data of each wind speed segment.

Compared with the prior art, this disclosure has the following technical effects:

This disclosure provides a full-power testing platform for tandem dual-rotor wind turbine generator systems, which can consider the aerodynamic coupling effect between the two rotors, and applies respectively and simultaneously driving torques to two end faces of a main shaft to simulate a load characteristic in a real state of the system. According to this disclosure, the full-power testing can be carried out for tandem dual-rotor wind turbine generator systems. According to this disclosure, a driving load under the influence of aerodynamic coupling of the front and rear rotors can be simulated, and the transmission chain of the dual-rotor wind turbine generator system is dragged to rotate through the synchronous loading of six degrees of freedom of the dual-rotor.

Through the platform for testing, following test verification can be completed: (1) function test verification for a controller and an electrical system; (2) grid-connected function testing for the system; (3) active power and reactive power decoupling testing; (4) electric energy quality analysis; (5) full-power component temperature rise testing; and (6) transmission chain vibration characteristic and reliability testing.

### BRIEF DESCRIPTION OF THE DRAWINGS

FIG. 1 is a schematic structural diagram of a full-power testing platform for tandem dual-rotor wind turbine generator systems according to an embodiment of this disclosure.
FIG. 2 is a schematic diagram of a tandem dual-rotor transmission chain according to an embodiment of this disclosure.
FIG. 3 is a flowchart of a testing method of a full-power testing platform for tandem dual-rotor wind turbine generator systems according to an embodiment of this disclosure.

In which:
a grid disconnection switch 1, a first transformer 2, a second transformer 3, a third transformer 4, a reactive power compensation unit 5, a dragging frequency converter 6, a unit converter 7, a dragging motor 8, a torque flange 9, a reduction gearbox 10, a compensation coupling 11, a dynamic non-torque loader 12, a tandem dual-rotor transmission chain 13, a signal acquisition instrument 19, a load simulator 20, a hydraulic controller 21 and a hydraulic station 22.

### DETAILED DESCRIPTION

Embodiments of this disclosure are described in detail below, and examples of the embodiments are shown in the accompanying drawings, in which the same or similar reference numerals refer to the same or similar elements or elements with the same or similar functions throughout. The embodiments described below with reference to the drawings are exemplary and are intended to explain this disclosure and are not to be construed as limiting this disclosure.

This disclosure is further described below with reference to the accompanying drawings.

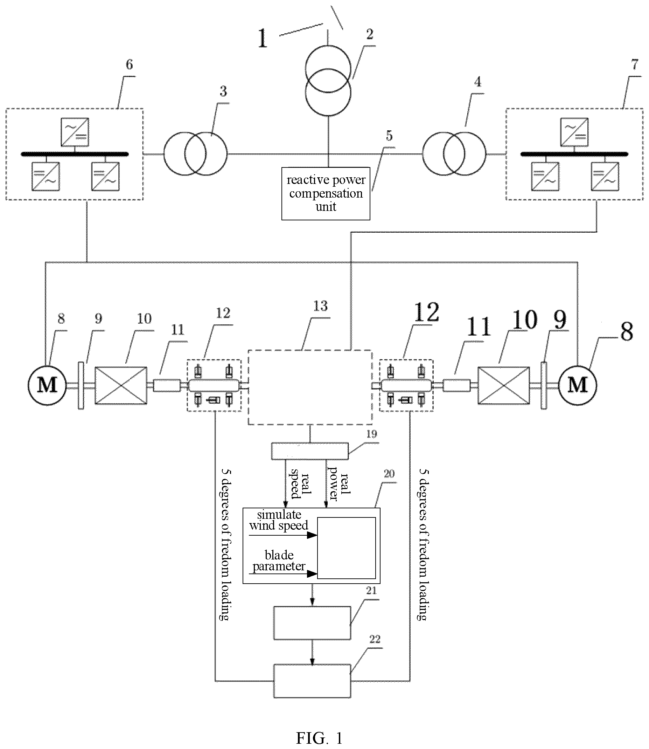

FIG. 1 is a schematic structural diagram of a full-power testing platform for tandem dual-rotor wind turbine generator systems according to an embodiment of this disclosure. The platform for testing of this disclosure considers the aerodynamic coupling effect between two rotors, and applies respectively and simultaneously driving torques to two end faces of a main shaft to simulate a load characteristic in a real state of the system. Through the platform for testing, following test verification can be completed: (1) function test verification for a controller and an electrical system; (2) grid-connected function testing for the system; (3) active power and reactive power decoupling testing; (4) electric energy quality analysis; (5) full-power component temperature rise testing; and (6) transmission chain vibration characteristic and reliability testing.

Referring to FIG. 1, the platform for testing of this disclosure includes a grid disconnection switch 1, a first transformer 2, a second transformer 3, a third transformer 4, a reactive power compensation unit 5, a dragging frequency converter 6, a unit converter 7, a dragging motor 8, a torque flange 9, a reduction gearbox 10, a compensation coupling 11, a dynamic non-torque loader 12, a tandem dual-rotor transmission chain 13, a signal acquisition instrument 19, a load simulator 20, a hydraulic controller 21 and a hydraulic station 22

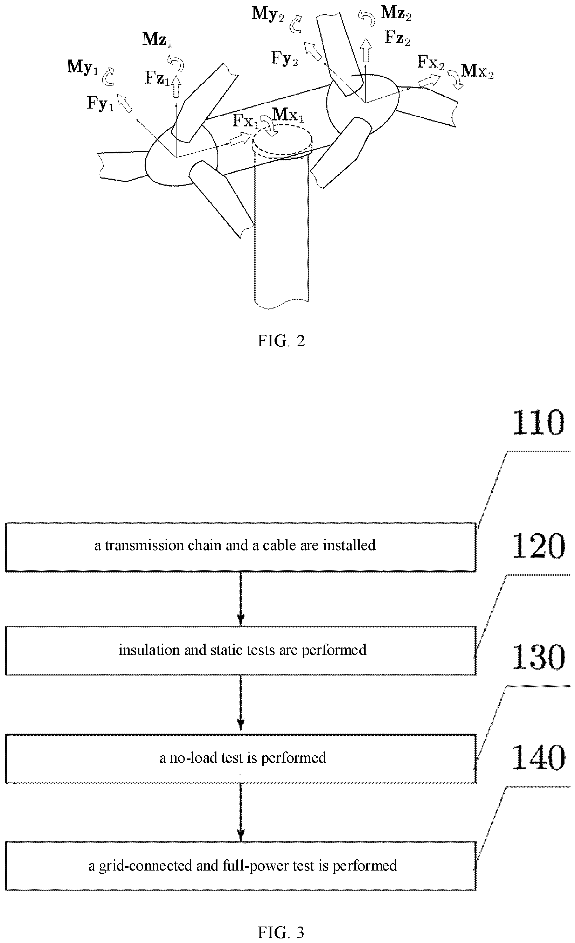

The second transformer 3 is used for isolating the dragging motor from the power grid, the third transformer 4 is a grid connection access point of the dual-rotor wind turbine generator system, the first transformer 2 is at the front ends of the second transformer 3 and the third transformer 4 and isolated from the public power grid, and a reactive power compensation unit 5 is added here to compensate reactive power of the power grid consumed by the platform for testing. The dragging motor 8 is connected with the reduction gearbox 10 via the torque flange 9, and a real rotor speed is simulated by using the reduction gearbox 10 for speed reducing. The reduction gearbox 10 is connected with the dynamic non-torque loader 12 via the compensation coupling 11, and the dynamic non-torque loader 12 is connected with a main shaft end of the tested system (i.e., the tandem dual-rotor transmission chain 13). Front and rear rotor degree-of-freedom loads (Fx, Fy, Fz, Mx, My, Mz) are applied by the dragging motor 8 cooperating with the dynamic non-torque loader 12, seeing FIG. 2

The load simulator 20 calculates the front and rear rotor degree-of-freedom loads in real time through wind speed, blade parameters, generator rotating speed, generator power and the like, the dynamic torque is applied through the dragging frequency converter 6 and the dragging motor 8, and the remaining 5 degree-of-freedom dynamic loads are applied through the hydraulic controller 21, the hydraulic station 22 and the dynamic non-torque loader 12. The front and rear rotor shaft drives the transmission chain to rotate, and the generator of the system feeds electric energy back into the power grid to form an energy loop on the test platform. The signal acquisition system acquires vibration data, temperature data, rotation speed data, power data, and the like in the test process in real time, for analyzing performance of the transmission chain.

Specifically, referring to FIG. 1, the full-power testing platform for tandem dual-rotor wind turbine generator systems according to this disclosure includes the dragging frequency converter 6, the unit converter 7, the tandem dual-rotor transmission chain 13, dragging motor assemblies, the signal acquisition instrument 19, the load simulator 20, and a hydraulic module. Both ends of the tandem dual-rotor transmission chain 13 are respectively connected with a dragging motor assembly, the dragging motor assemblies at the two ends are both connected to the dragging frequency converter 6. The unit converter 7 and the signal acquisition instrument 19 are both connected with the tandem dual-rotor transmission chain 13. The signal acquisition instrument 19 is connected with the load simulator 20, and the load simulator 20 is connected with the hydraulic module. The dragging frequency converter 6 and the unit converter 7 are respectively connected to an external power grid.

In some embodiments, the external power grid is connected to the dragging frequency converter 6 and the unit converter 7 via the first transformer 2, the second transformer 3 is arranged between the dragging frequency converter 6 and the first transformer, the third transformer 4 is arranged between the unit converter 7 and the first transformer, and the first transformer 2 is provided with the reactive power compensation unit for compensating the reactive power of the power grid consumed by the platform for testing.

In some embodiments, the dragging motor assembly includes the dragging motor 8, the torque flange 9, the reduction gearbox 10, the compensation coupling 11, and the dynamic non-torque loader 12. A main shaft end of the tandem dual-rotor transmission chain 13 is connected to the dynamic non-torque loader 12. The dynamic non-torque loader 12, the compensation coupling 11, the reduction gearbox 10, the torque flange 9, and the dragging motor 8 are connected in sequence. In addition, the two dragging motor assemblies at the two ends of the tandem dual-rotor transmission chain 13 may be symmetrically arranged relative to the tandem dual-rotor transmission chain 13.

In some embodiments, the dynamic non-torque loader 12 is connected to the hydraulic module. The hydraulic module includes the hydraulic controller 21 and the hydraulic station 22, and the hydraulic controller 21 is connected to the hydraulic station 22.

In some embodiments, the simulation parameters of the load simulator 20 include wind speed, blade parameters, generator speed, and generator power.

This disclosure further provides a test method of a full-power testing platform for tandem dual-rotor wind turbine generator systems. The method can be implemented by using the full-power testing platform for tandem dual-rotor wind turbine generator systems, and the test method includes the following steps:
install the tandem dual-rotor system chain 13, and respectively connect the main shaft ends of the front and rear rotor to the output ends of the dynamic non-torque loaders 12;
perform an insulation test on a circuit within a cabin before power-on, and conduct a static test on the unit after power-on;
drag, the tandem dual-rotor transmission chain 13 to the rated rotation speed by the dragging motors 8, let it idle for a period of time, and check whether the operation of the unit is stable, and whether there are abnormal conditions, such as vibration, oil leakage, or other situations ;
carry out load tests according to different set average wind speeds respectively, record the vibration of each component of the transmission chain, the relevant temperature values of the generator, gearbox, and main bearing, and generator power fluctuation in real time, and treat and analyze the operation data of each wind speed segment.

FIG. 3 is a flowchart of a test method of a full-power testing platform for tandem dual-rotor wind turbine generator systems according to an embodiment of this disclosure. The method includes steps 110, 120, 130, and 140.

Step 110, a transmission chain and a cable are installed.

In this step, the transmission chain of the dual-rotor wind turbine generator system is installed as required, and the main shaft ends of the front and rear rotor are respectively connected with the output ends of dynamic non-torque loaders; and the installation of the cable and circuit are finished as required.

Step 120, insulation and static tests are performed.

In this step, the insulation test is performed on the circuit within a cabin before power-on, and the static test is conducted on the unit after power-on (mainly checking whether sensor reading is accurate, and whether an actuator can normally operate as required).

Step 130, a no-load test is performed.

In this step, the dragging motor drives the transmission chain of the dual-rotor system to the rated rotating speed, lets it idle for a period of time, and it is checked whether the operation of the unit is stable, and whether there are abnormal conditions, such as vibration, oil leakage, or other situations.

Step 140, a grid-connected and full-power test is performed.

In this step, load tests are carried out according to preset average wind speeds, for example, the load tests are carried out according to an average wind speed of 4 m/s, 6 m/s, 8 m/s, 10 m/s and 12 m/s, respectively, and the load test are carried out for 30 minutes at each wind speed. The vibration of each component of the transmission chain, the relevant temperature values of the generator, gearbox, and main bearing, and generator power fluctuation, and the like are recorded in real time, and the operation data of each wind speed segment is treated and analyzed.

In the description of the embodiments of this disclosure, the reference terms "an embodiment", "some embodiments", "example", "specific example", and "some examples" and the like are intended to describe specific features, structures, materials, or characteristics described in combination with the embodiment or example are included in at least one embodiment or example of this disclosure. In this disclosure, the schematic expressions of the above terms do not have to be directed to the same embodiments or examples. Moreover, the specific features, structures, materials, or characteristics described may be combined in a suitable manner in any one or more embodiments or examples. In addition, without contradicting each other, those skilled in the art may combine different embodiments or examples described in this disclosure with features of different embodiments or examples.

In the description of this disclosure, the terms "first" and "second" are used for descriptive purposes only, and are not to be construed as indicating or implying relative importance or implicitly indicating the number of technical features indicated. Therefore, the features defined with the terms "first" and "second" may explicitly or implicitly indicate at least one such feature. In the description of this disclosure, "a plurality of" means at least two, e.g., two and three, unless otherwise expressly and specifically limited

Any process or method description in the flowchart or otherwise described herein may be understood to representing a module, segment, or portion include of code that includes executable instructions for implementing one or more steps of a customized logic function or process, and the scope of the preferred embodiments of the present application includes additional implementations, where the functions may not be performed in a substantially simultaneous manner or in the reverse order based on the functionality involved, regardless of the order shown or discussed, and should be understood by those skilled in the art to which embodiments of the present application belong.

Although the embodiments of this disclosure have been shown and described above, it can be understood that the above embodiments are exemplary and cannot be understood as limitations to this disclosure, and those skilled in the art can make changes, modifications, substitutions and variations to the above embodiments within the scope of this disclosure.

## Claims

1. A full-power testing platform for tandem dual-rotor wind turbine generator systems, comprising:
a dragging frequency converter (6), a unit converter (7), a tandem dual-rotor transmission chain (13), dragging motor assemblies, a signal acquisition instrument (19), a load simulator (20) and a hydraulic module,
wherein both ends of the tandem dual-rotor transmission chain (13) are respectively connected to a dragging motor assembly, and the dragging motor assemblies at the two ends are both connected to the dragging frequency converter (6),
the unit converter (7) and the signal acquisition instrument (19) are both connected to the tandem dual-rotor transmission chain (13),
the signal acquisition instrument (19) is connected to the load simulator (20), and the load simulator (20) is connected to the hydraulic module, and
the dragging frequency converter (6) and the unit converter (7) are respectively connected to an external power grid.

2. The platform according to claim 1, wherein the external power grid is connected to the dragging frequency converter (6) and the unit converter (7) via a first transformer (2), a second transformer (3) is arranged between the dragging frequency converter (6) and the first transformer, and a third transformer (4) is arranged between the unit converter (7) and the first transformer.

3. The platform according to claim 2, wherein the first transformer (2) is provided with a reactive power compensation unit for compensating reactive power consumed by the testing platform from the power grid.

4. The platform according to any one of claims 1 to 3, wherein the dragging motor assembly comprises a dragging motor (8), a torque flange (9), a reduction gearbox (10), a compensation coupling (11) and a dynamic non-torque loader (12), wherein a main shaft end of the tandem dual-rotor transmission chain (13) is connected to the dynamic non-torque loader (12), and the dynamic non-torque loader (12), the compensation coupling (11), the reduction gearbox (10), the torque flange (9), and the dragging motor (8) are connected in sequence.

5. The platform according to claim 4, wherein the dynamic non-torque loader (12) is connected to the hydraulic module.

6. The platform according to any one of claims 1 to 5, wherein the hydraulic module comprises a hydraulic controller (21) and a hydraulic station (22), and the hydraulic controller (21) is connected to the hydraulic station (22).

7. The platform according to any one of claims 1 to 6, wherein simulation parameters of the load simulator (20) comprise wind speed, blade parameters, generator speed, and generator power.

8. A test method of a full-power testing platform for tandem dual-rotor wind turbine generator systems, which is implemented by the full-power testing platform for tandem dual-rotor wind turbine generator systems according to any one of claims 1 to 7, comprising:
installing the tandem dual-rotor transmission chain, and connecting the main shaft ends of the front and rear rotor to the output ends of dynamic non-torque loaders, respectively;
performing an insulation test on a circuit within a cabin before power-on, and conducting a static test on the unit after power-on;
dragging the tandem dual-rotor system transmission chain to the rated rotation speed by the dragging motor, letting it idle for a period of time, and checking whether the operation of the unit is stable, and whether there are abnormal conditions comprising vibration or oil leakage;
carrying out load tests according to different predetermined average wind speeds respectively, recording the vibration of each component of the transmission chain, the relevant temperature values of the generator, gearbox, main bearing, and generator power fluctuation in real time, and treating and analyzing the operation data of each wind speed segment.
